(19) Europäisches Patentamt
European Patent Office
Office européen des brevets

(11) **EP 2 509 207 A2**

(12) **EUROPEAN PATENT APPLICATION**

(43) Date of publication:
**10.10.2012 Bulletin 2012/41**

(51) Int Cl.:
***H02M 5/458*** (2006.01)

(21) Application number: **12002421.1**

(22) Date of filing: **03.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.04.2011 JP 2011084296**

(71) Applicant: **Hitachi, Ltd.**
**Tokyo 100-8280 (JP)**

(72) Inventors:
• **Ochi, Kentaro**
**Tokyo 100-8220 (JP)**
• **Katoh, Shuji**
**Tokyo 100-8220 (JP)**
• **Morita, Hiroshi**
**Tokyo 100-8220 (JP)**
• **Yoshitake, Yuichiro**
**Tokyo 100-8220 (JP)**

(74) Representative: **Strehl Schübel-Hopf & Partner**
**Maximilianstrasse 54**
**80538 München (DE)**

(54) **Power conversion system**

(57)     A power conversion system (10) suppresses condensers (3) from breaking down owing to thermal runaway. A resonance frequency f decided by parasitic inductance (6) of condensers (3) and capacitance of the condensers (3) changed in response to use temperature of the condensers (3) and/or DC voltage applied to the condensers (3) is set to fall within a range of $mfc+\Delta f \leqq f \leqq (m+1)fc-\Delta f$, where fc is a carrier frequency for driving at least one of switching elements (SW1 to SW6) of the first power converter (2) and switching elements (SW7 to SW12) of the second power converter (4), $\Delta f$ a predetermined frequency and m a positive integer.

FIG. 2

**Description**

BACKGROUND OF THE INVENTION

The present invention relates to a power conversion system provided with smoothing condensers.

Generally, in a power conversion system of AC-DC-AC conversion type, which converts first AC power supplied from an AC power source into DC power and further converts the DC power into second AC power to supply desired AC power to a load, smoothing condensers (hereinafter simply refer to as condensers) are connected in parallel to the DC output side thereof.

In such a circuit, ripple current is produced in response to switching operation of an inverter circuit, a switching circuit and the like constituting DC-AC converter circuit. Further, the larger the current flowing through the load is, the larger the ripple current is.

The ripple current causes heating of the condensers. When the ripple current is increased with rise in temperature of the condensers, it is apprehended that the condensers lead to thermal runaway. Accordingly, in order to avoid such a thermal runaway of the condensers, there is disclosed a technique that capacitance of the condensers is increased or the condensers having temperature dependence to change of capacitance are used.

In the technique described in JP-A-2009-60691, for example, in an inverter device in which condensers are connected in parallel to a DC power source such as a battery and an inverter circuit provided on the output side thereof supplies AC power to a load such as a motor, thermal runaway of the condensers is avoided as follows. That is, in the technique described in JP-A-2009-60691, in a series resonant circuit formed by capacitance of the condensers and inductance of wiring on the input side, a resonance frequency of the series resonant circuit is made higher or lower than a frequency of the ripple current, so that the ripple current of the condensers is reduced and thermal runaway of the condensers is avoided.

In other words, in the technique described in JP-A-2009-60691, the capacitance is changed by heating of the condensers caused by the ripple current and the resonance frequency by the condensers and the inductance is made higher or lower than the frequency of the ripple current, so that the ripple current is reduced and thermal runaway of the condensers is avoided.

SUMMARY OF THE INVENTION

The technique described in JP-A-2009-60691 is applied to, for example, an inverter device which converts DC power supplied from battery of an electric vehicle or a hybrid vehicle into AC power to supply desired AC power to a motor. Accordingly, it is supposed that inductance of wiring connected from the battery to the condensers is considerably large. Therefore, since impedance on the input side as viewed from the inverter side is considerably large, large ripple current is generally produced in the condensers on the input side. Accordingly, in the technique of JP-A-2009-60691, the resonance frequency of the series resonant circuit by such large inductance and condensers is changed to thereby reduce the ripple current flowing through the condensers.

However, in the power converter of AC-DC-AC type, the condensers connected in parallel to the DC side corresponds to battery as viewed from the inverter side and accordingly a large number of condensers are connected in parallel to one another in order to make the capacitance of the condensers larger. Accordingly, the resonance phenomenon caused by the ripple current of the condensers is produced by the parallel resonance circuit formed by all capacitance between the plural condensers connected in parallel and parasitic inductance between condensers. The parasitic inductance at this time is considerably small as compared with inductance of wiring connected from battery to condensers described in JP-A-2009-60691. Accordingly, there arises a problem that the technique of ripple current control disclosed in JP-A-2009-60691 cannot be applied as technique for suppressing heating caused by ripple current in case where the plural condensers are connected in parallel to the input side of the inverter of the power conversion system of AC-DC-AC type.

Accordingly, it is an object of the present invention to provide a power conversion system capable of suppressing thermal runaway of condensers.

In order to achieve the above object, according to the present invention, the resonance frequency f decided by parasitic inductance of condensers and capacitance of the condensers changed by use temperature of the condensers and/or DC voltage applied to the condensers is set to fall within the range given by:

$$mfc + \Delta f \leqq f \leqq (m+1)fc - \Delta f$$

where fc is a carrier frequency for driving at least one of switching elements of a first power converter and switching elements of a second power converter, $\Delta f$ a predetermined frequency and m an positive integer.

According to the present invention, there can be provided the power conversion system which can suppress thermal runaway of the condensers.

BRIEF DESCRIPTION OF THE DRAWINGS

Fig. 1 is a block diagram schematically illustrating a power conversion system and its input/output circuit according to a first embodiment of the present invention;

Fig. 2 is a circuit diagram schematically illustrating the power conversion system and its input/output circuit according to the first embodiment of the present invention;

Fig. 3 is a characteristic diagram showing the relation of temperature and capacitance of condensers applied to the first embodiment of the present invention;

Figs. 4A and 4B are characteristic diagrams showing the relation of resonance frequency and carrier frequency applied to the embodiment, in which Fig. 4A shows the characteristic of input current to carrier frequency and Fig. 4B shows the characteristic of resonance response factor to resonance frequency;

Fig. 5 is a circuit diagram schematically illustrating a power conversion system and its input/output circuit according to a second embodiment of the present invention; and

Fig. 6 is a characteristic diagram showing the relation of DC voltage and capacitance of condensers applied to the second embodiment of the present invention.

DESCRIPTION OF THE EMBODIMENTS

Embodiments of the present invention will be described in detail with reference to the accompanying drawings. In the drawings, the common parts or like elements are designated by the like reference numerals and duplicate description thereof is omitted.

«FIRST EMBODIMENT»

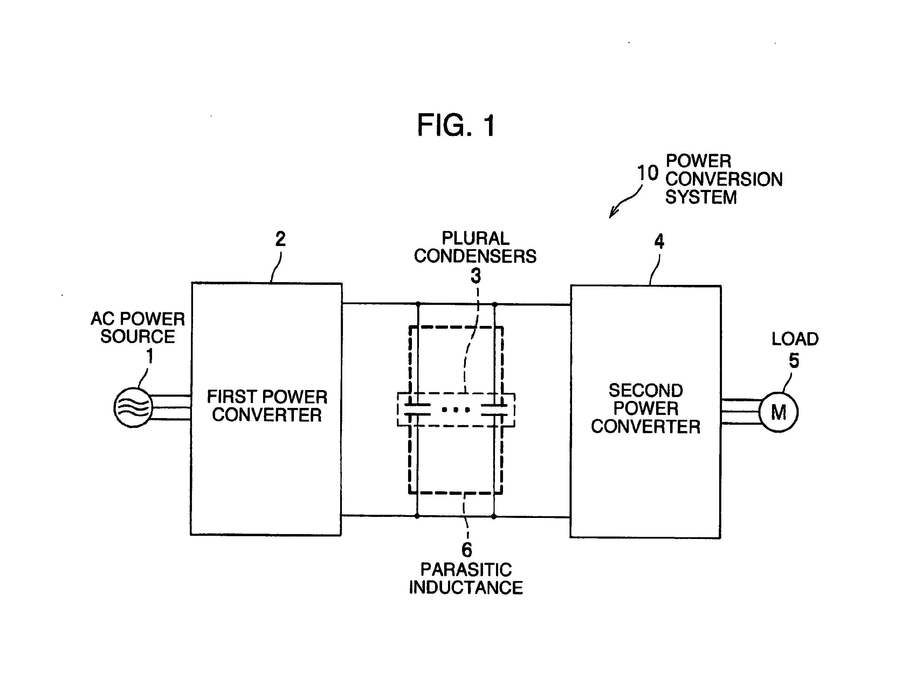

Fig. 1 is a block diagram schematically illustrating a power conversion system and its input/output circuit according to the first embodiment of the present invention.

As shown in Fig. 1, a power conversion system 10 includes an AC power source 1 such as magnetic field AC generator and commercial power source, a first power converter 2 for converting first AC power supplied from the AC power source 1 into DC power, plural condensers 3 for smoothing DC voltage outputted from the first power converter 2, a second power converter 4 for converting the DC power outputted from the first power converter 2 into second AC power and a load 5 such as motor supplied with the second AC power outputted from the second power converter 4. Further, parasitic inductance 6 is produced by connection routes between inner electrodes of the condensers 3 and external parallel wiring routes thereof.

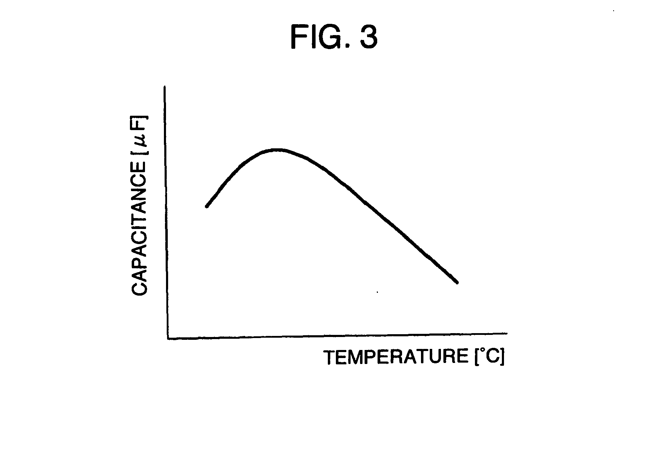

The plural condensers 3 (for example, ceramic condensers) having capacitance of temperature dependence (refer to Fig. 3) and the parasitic inductance 6 exist between the first and second power converters 2 and 4. A parallel resonance circuit is formed by the condensers 3 and parasitic inductance 6.

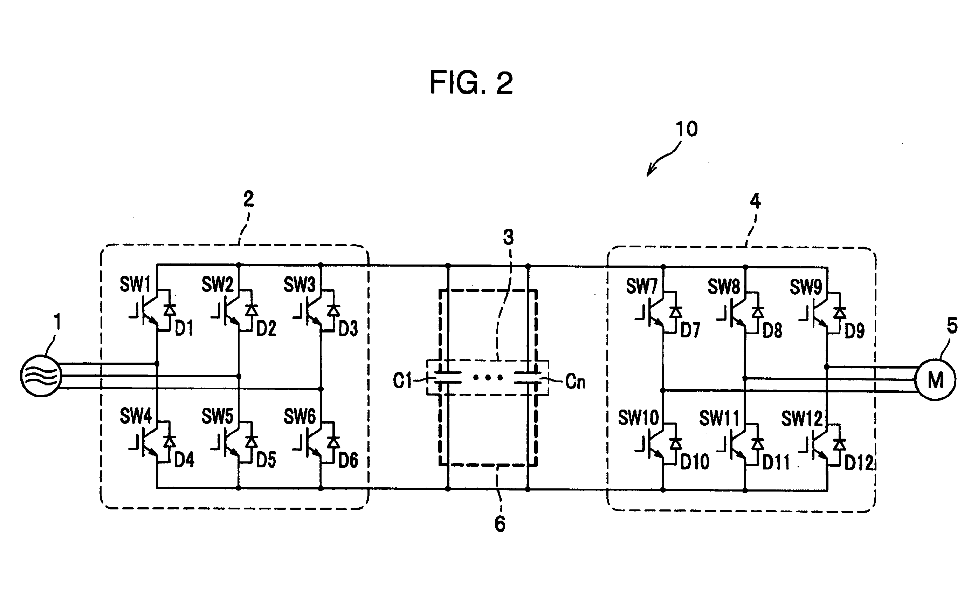

Fig. 2 is a circuit diagram schematically illustrating the power conversion system and its input/output circuit according to the first embodiment of the present invention.

The first power converter 2 is realized by a three-phase rectifier circuit, for example. The first power converter 2 includes switching elements SW1 to SW6 and backflow preventing rectifier elements D1 to D6 for the switching elements SW1 to SW6. The switching elements SW1 to SW6 are made of semiconductor switching elements such as, for example, IGBT (Insulated Gate Bipolar Transistor), MOSFET (Metal Oxide Semiconductor Field Effect Transistor) and GTO (Gate Turn Off Thyristor). The backflow preventing rectifier elements D1 to D6 are diodes, for example. The connection method of the switching elements SW1 to SW6 and the backflow preventing rectifier elements D1 to D6 is a general connection method of a rectifier circuit and description thereof is omitted.

A gate signal (not shown) for controlling a conduction amount of the switching elements SW1 to SW6 is inputted externally so as to maintain an output-side voltage of the first power converter 2 to be a fixed value.

The plural condensers 3 are provided to smooth DC voltage outputted from the first power converter 2 and are connected in parallel to the output side of the first power converter 2. The plural condensers 3 are composed of condensers C1 to Cn (n is an integer equal to or larger than 2) and plural condensers can be connected in parallel to one another to thereby increase its composite capacitance.

The second power converter 4 is realized by a three-phase inverter, for example. The second power converter 4 includes switching elements SW7 to SW12 and backflow preventing rectifier elements D7 to D12 for the switching elements SW7 to SW12. The switching elements SW7 to SW12 are made of semiconductor switching elements such as, for example, IGBT (Insulated Gate Bipolar Transistor), MOSFET (Metal Oxide Semiconductor Field Effect Transistor) and GTO (Gate Turn Off Thyristor). The backflow preventing rectifier elements D7 to D12 are diodes, for example. The connection method of the switching elements SW7 to SW12 and the backflow preventing rectifier elements D7 to D12 is a general connection method of an inverter circuit and description thereof is omitted.

A gate signal (not shown) for controlling a conduction amount of the switching elements SW7 to SW12 is inputted externally so as to supply AC power from the output side of the second power converter 4.

AC power supplied from the AC power source 1 is converted into DC voltage by the first power converter 2. The DC voltage is smoothed by the plural condensers 3 to be supplied to the second power converter 4. Further, the DC voltage is converted into AC power by the second power converter 4 to be supplied to the load 5.

The first power converter 2 shown in Fig. 2 constitutes a three-phase rectifier circuit and the second power converter 4 constitutes a three-phase inverter circuit, although if the AC power source 1 is, for example, a single-phase power source, the first power converter 2 of Fig. 1 is of single phase and is composed of two switching elements SW's (not shown). Furthermore, if the load 5 is a single-phase motor, the second power converter 4 of Fig. 1 is of single phase and is composed of two switching elements SW's (not shown).

Moreover, even in case where the number of phases is different, the same thing is applicable similarly. The circuit of the first power converter 2 can be configured properly in accordance with the number of phases of the AC power source 1 and the circuit of the second power converter 4 can be also configured properly in accordance with the number of phases of the load 5.

Fig. 3 is a characteristic diagram showing the relation of temperature and capacitance of condensers applied to the first embodiment of the present invention. The horizontal axis represents temperature and the vertical axis represents capacitance. The capacitance of the condensers C1 to Cn shown in Fig. 2 has the temperature dependence as shown in Fig. 3 and is changed in accordance with temperature of the condensers. That is, the condensers has a so-called negative temperature dependence that the capacitance thereof is reduced with rise in temperature when a certain temperature is exceeded (for example, 0° C or more). The condensers having such a temperature dependence is, for example, ceramic condensers. The capacitance per unit volume of the ceramic condensers can be increased and accordingly the ceramic condensers are used by preference when plural condensers are connected in parallel to the DC input side of the power conversion system where large current flows.

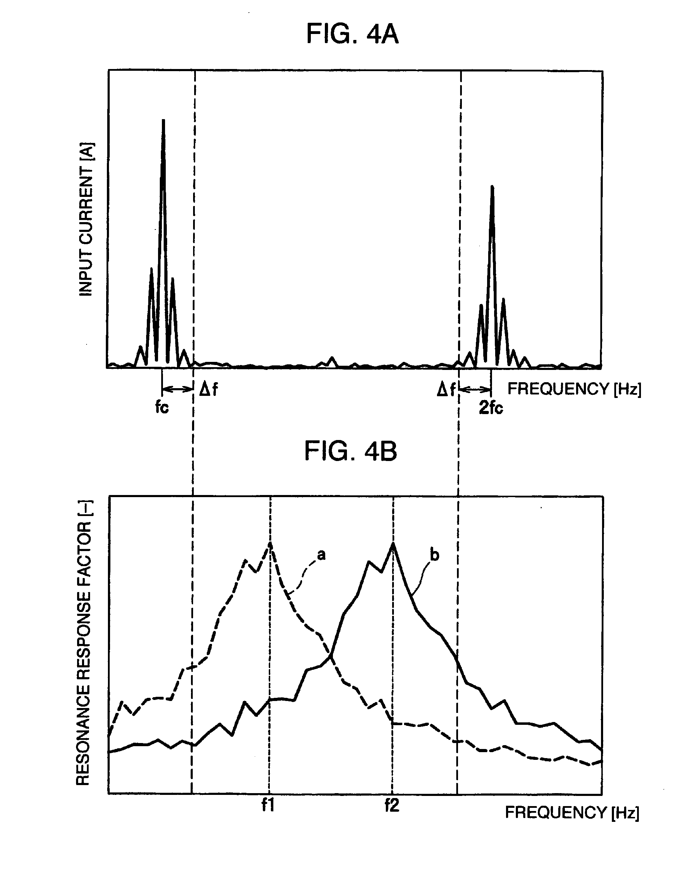

Figs. 4A and 4B are characteristic diagrams showing the relation between resonance frequency and carrier frequency applied to the embodiment. Fig. 4A shows the characteristic of carrier frequency, in which the horizontal axis represents frequency and the vertical axis represents input current (ripple current). Fig. 4B shows the characteristic of resonance frequency, in which the horizontal axis represents frequency and the vertical axis represents resonance response factor. In the characteristic diagram of Fig. 4A, fc represents carrier frequency and 2fc represents double carrier frequency. The carrier frequency is a switching frequency or PWM (Pulse Width Modulation) frequency for driving the switching elements (SW1 to SW6) of the first power converter 2 or/and the switching elements (SW7 to SW12) of the second power converter 4. The input current of Fig. 4A represents current flowing through the plural condensers C1 to Cn.

Further, f1 of Fig. 4B represents resonance frequency at the lowest temperature within use temperature range and f2 represents resonance frequency at the highest temperature within the use temperature range.

Referring to Fig. 4B, in the characteristic a showing the resonance characteristic of the condensers C1 to Cn at the lowest temperature (that is assumed to be T1) within the use temperature range, the resonance response factor is maximum when the carrier frequency is f1. That is, it is understood that f1 is the resonance frequency decided by parasitic inductance and all capacitance of the condensers C1 to Cn at the lowest temperature T1.

Further, referring to Fig. 4B, in the characteristic b showing the resonance characteristic of the condensers C1 to Cn at the highest temperature (that is assumed to be T2) within the use temperature range, the resonance response factor is maximum when the carrier frequency is f2. That is, it is understood that f2 is the resonance frequency decided by parasitic inductance and all capacitance of the condensers C1 to Cn at the highest temperature T2.

As described above, the reason that the resonance characteristic of the condensers C1 to Cn is changed in accordance with use temperature (refer to Fig. 4B) is that the capacitance of the condensers C1 to Cn is changed in accordance with use temperature (refer to Fig. 3).

Further, when temperature of the condensers C1 to Cn rises at the time that the ripple current flows through the condensers C1 to Cn, the resonance characteristic of the condensers C1 to Cn is shifted rightward (in the direction from characteristic a to characteristic b of Fig. 4B).

Here, if the resonance frequency of the condensers C1 to Cn is made higher with rise in temperature and is coincident with the carrier frequency or an integral multiple of the carrier frequency, large current flows through the condensers C1 to Cn, so that it is apprehended that the condensers C1 to Cn break down.

In the power conversion system 10 of the embodiment, the resonance frequency f decided by inductance value L of parasitic inductance 6 formed among the plural condensers C1 to Cn connected in parallel to one another and all capacitance C of the condensers C1 to Cn within use temperature range is set to fall within the following range. That is, in the embodiment, the resonance frequency f falls within the range given by:

$$mfc + \Delta f \leq f \leq (m+1)fc - \Delta f$$

where fc is a carrier frequency for driving at least one of switching elements SW1 to SW6 of the first power converter 2 and switching elements SW7 to SW12 of the second power converter 4 and m is an positive integer. This can be realized by adjusting the carrier frequency fc, all capacitance C of the condensers C1 to Cn and inductance value L of the parasitic inductance 6.

Here, fc is 600 Hz and $\Delta f$ is equal to or higher than 10 Hz and equal to or lower than 100 Hz, for example. Further, $\Delta f$ is selected so that the ripple current inputted in the condensers C1 to Cn is suppressed to be equal to or smaller than 200 Arms, for example, within the range of $mfc + \Delta f \leq f \leq (m+1)fc - \Delta f$.

As shown in Fig. 4B, at the lowest temperature T1 within the use temperature range, the resonance characteristic of the condensers C1 to Cn is characteristic a and the resonance frequency thereof is f1. Further, at the highest temperature T2 within the use temperature range, the resonance characteristic of the condensers C1 to Cn is characteristic b and the resonance frequency thereof is f2. Consequently, the resonance frequency f decided by all capacitance C of the condensers C1 to Cn within the use temperature range is equal to or higher than f1 and equal to or lower than f2.

In Figs. 4A and 4B, the resonance frequency (f: f1≦f≦f2) within the use temperature range shown in Fig. 4B falls within the range of fc+Δf≦f≦2fc-Δf as shown in Fig. 4A. Here, fc is 600 Hz and Δf is equal to or higher than 10 Hz and equal to or lower than 100 Hz, for example.

Further, the resonance frequency f may be set to fall within the range of 2fc+Δf≦f≦3fc-Δf or 3fc+Δf≦f≦4fc-Δf Similarly, m is a positive integer and the resonance frequency f may be set to fall within the range of mfc+Δf≦f≦ m+1)fc-Δf This can be realized by adjusting the carrier frequency fc, all capacitance C of the condensers C1 to Cn and inductance value L of the parasitic inductance.

Furthermore, it is assumed that the above data within the use temperature range of the condensers C1 to Cn are obtained beforehand by examination.

The ripple current is produced or caused in synchronism with the frequency mfc equal to an integral multiple of the carrier frequency fc. When the carrier frequency, that is, the frequency of the ripple current is coincident with the resonance frequency of the circuit, large ripple current flows. Accordingly, the resonance frequency f (f1≦f≦f2: refer to Fig. 4B) within the use temperature range of the condensers is set to fall within the range of mfc+Δf≦f≦(m+1)fc-Δf where m is a positive integer, so that the ripple current can be prevented from being increased.

According to the power conversion system 10 of the embodiment, even when temperature of the condensers C1 to Cn rises, the carrier frequency and the resonance frequency decided by the composite capacitance of the condensers C1 to Cn within the use temperature range and the parasitic inductance 6 are not overlapped and accordingly it is not apprehended that large ripple current flows through the condensers. Consequently, temperature of the condensers can be converged to predetermined temperature level and thermal runaway caused by rise in temperature of the condensers C1 to Cn can be avoided. Accordingly, the reliability and safety of the power conversion system can be enhanced.

Moreover, when ceramic condensers are used as the plural condensers 3, the ceramic condensers have low ESR (Equivalent Series Resistance) and excellent thermal resistance and accordingly the merit that miniaturization is expedited can be utilized. Therefore, there can be provided the power conversion system capable of avoiding thermal runaway and having excellent reliability.

«SECOND EMBODIMENT»

In the first embodiment, operation in case where the capacitance of the condensers is changed in accordance with temperature has been described. In the second embodiment, even when the capacitance of the condensers is changed in response to DC voltage, the resonance frequency f within the use voltage range is set to fall within the range of mfc+Δf≦f≦(m+1)fc-Δf where fc is carrier frequency and m is a positive integer, so that the ripple current can be reduced.

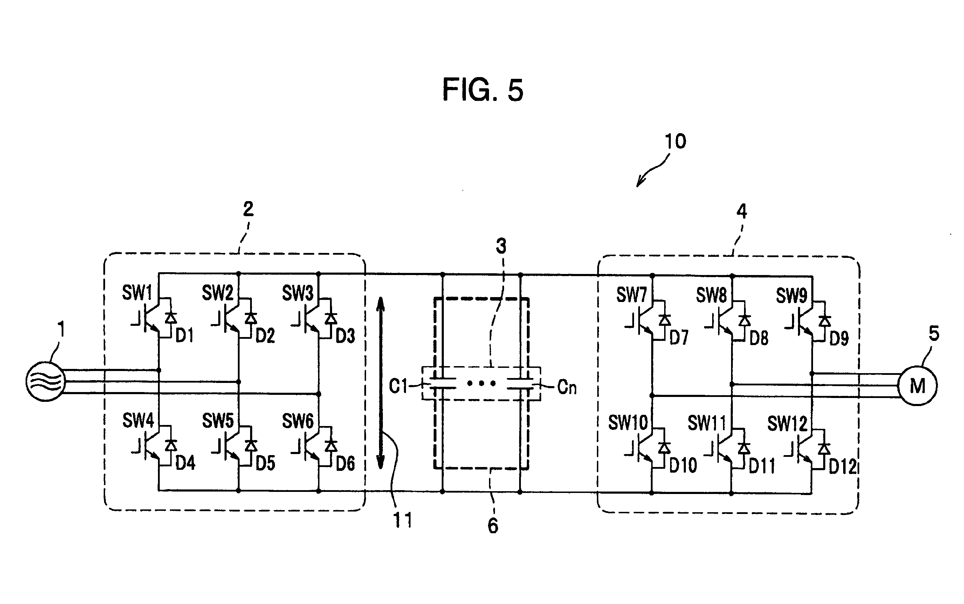

Fig. 5 is a circuit diagram schematically illustrating a power conversion system and its input/output circuit according to the second embodiment of the present invention. The configuration of the power conversion system and its input/output circuit shown in Fig. 5 is the same as that of the power conversion system and its input/output circuit shown in Fig. 1. Accordingly, description of constituent elements of the circuit thereof is omitted.

In the circuit of Fig. 5, DC voltage which is a bias voltage of the condensers C1 to Cn is changed (refer to arrow 11 of Fig. 5).

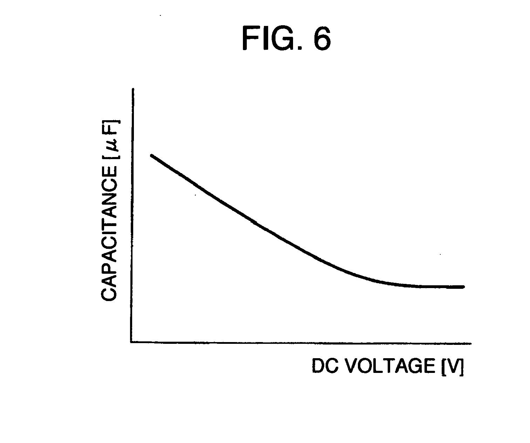

Fig. 6 is a characteristic diagram showing the relation of DC voltage impressed to the condensers and capacitance thereof applied to the second embodiment of the present invention. The horizontal axis represents DC voltage and the vertical axis represents capacitance. That is, in the embodiment, the capacitance of the condensers C1 to Cn has the DC voltage dependence and as the DC voltage 11 (refer to Fig. 5) biased to the condensers C1 to Cn is made higher, the capacitance of the condensers is reduced.

Even in the embodiment, the relation of carrier frequency and input current is as shown in Fig. 4A and the relation of resonance frequency and resonance response factor is as shown in Fig. 4B. That is, in the power conversion system 10 of the embodiment, the resonance frequency f (refer to Fig.4B) decided by inductance value L of the parasitic inductance 6 formed among the plural condensers 3 connected in parallel to one another and all capacitance C of the condensers 3 within the change range of the DC voltage 11 biased to the condensers 3 is set to fall within the following range. That is, in the embodiment, the resonance frequency f is set to fall within the range of mfc+Δf≦f≦(m+1)fc-Δf where fc is carrier frequency and m is a positive integer.

Here, fc is 600 Hz and Δf is equal to or higher than 10 Hz and equal to or lower than 100 Hz, for example. Further, Δf is selected so that the ripple current inputted in the condensers C1 to Cn is suppressed to be equal to or smaller than 200 Arms, for example, within the range of mfc+Δf≦f≦(m+1)fc-Δf

The above setting can be realized by adjusting carrier frequency fc, all capacitance C of condensers C1 to Cn and inductance value L of parasitic inductance 6.

Furthermore, it is assumed that the above data within the use range of the DC voltage impressed to the condensers C1 to Cn are obtained beforehand by examination.

In the characteristic diagram of the resonance frequency of Fig. 4B in the embodiment, the characteristic a represents the case where DC voltage 11 is lower and the characteristic b represents the case where DC voltage 11 is higher.

As shown in Fig. 4B, the resonance characteristic of the condensers C1 to Cn is characteristic a and the resonance frequency thereof is f1 in the lowest voltage within the range of DC voltage 11 to be used. Further, the resonance characteristic of the condensers Cto Cn is characteristic b and the resonance frequency thereof is f2 in the highest voltage within the range of DC voltage 11 to be used. Consequently, the resonance frequency f decided by all capacitance C of the condensers C1 to Cn within the use range of DC voltage 11 is equal to or higher than f1 and equal to or lower than f2. Further, the reason that the resonance characteristic of the condensers C1 to Cn is changed in accordance with DC voltage 11 is that the capacitance of the condensers C1 to Cn is changed in accordance with DC voltage 11 as in Fig. 6.

As the DC voltage 11 is made higher, the capacitance of the condensers 3 is reduced (refer to Fig. 6) and the resonance frequency is shifted toward the higher side (in the direction from characteristic a to characteristic b shown in Fig. 4B).

The resonance frequency f decided by inductance value L of the parasitic inductance 6 formed among the plural condensers C1 to Cn connected in parallel to one another and all capacitance C of the condensers C1 to Cn within change range of DC voltage 11 impressed to the condensers C1 to Cn is set to fall within the following range. That is, as shown in Fig. 4A, the resonance frequency f is set to fall within the range of $fC+\Delta f \leqq f \leqq 2fc-\Delta f$

Here, fc is 600 Hz and $\Delta f$ is equal to or higher than 10 Hz and equal to or lower than 100 Hz, for example.

Consequently, since the resonance frequency f is not overlapped on the frequency (fc and 2fc in Fig. 4A) equal to an integral multiple of the carrier frequency fc, the ripple current can be prevented from being increased and the reliability of the power converter 10 can be enhanced.

In the above description, the case of $fc+\Delta f \leqq f \leqq 2fc-\Delta f$ has been described, although generally the resonance frequency may be set to fall within the range of $mfc+\Delta f \leqq f \leqq (m+1)fc-\Delta f$ where m is a positive integer. Further, this can be realized by adjusting carrier frequency fc, all capacitance C of condensers C1 to Cn and inductance value L of parasitic inductance 6.

Moreover, even in the embodiment, when ceramic condensers are used as the condensers C1 to Cn, the ceramic condensers have low ESR and excellent thermal resistance and accordingly the merit that miniaturization is expedited can be utilized. Therefore, there can be provided the power conversion system capable of avoiding thermal runaway and having excellent reliability.

In the above description, the embodiments of the power conversion system according to the present invention have been described concretely, although it is needless to say that the present invention is not limited to the contents of the embodiments and various modifications can be made without departing from the gist of the invention.

For example, even when the condensers C1 to Cn connected in parallel to DC input of the power conversion system 10 (10A) have both of temperature dependence and DC voltage dependence, thermal runaway of the condensers C1 to Cn can be suppressed as follows. That is, the resonance frequency f is set to fall within the range of $mfc+\Delta f \leqq f \leqq (m+1)fc-\Delta f$, so that there can be realized the high-reliable power conversion system which can suppress the ripple current of condensers and avoid the thermal runaway of the condensers.

The condensers used in the power conversion system of the present invention is made of dielectric material having temperature dependence and DC voltage dependence in capacitance. Ceramic condensers are mentioned as an example suitable for the condensers realized by such dielectric material. Since the ceramic condensers have large capacitance per unit volume, a large number of small ceramic condensers can be connected in parallel to one another between DC bus (DC input wiring). The power system including the power conversion system of a large-capacity type can be made still smaller.

Furthermore, since ceramic condensers are made of ceramic that is inorganic material, the ceramic condensers have excellent thermal resistance and ESR thereof can be made smaller. With such characteristics, the reliability of the power conversion system for high voltage and large current can be enhanced and the power system including the power conversion system can be made still smaller.

[INDUSTRIAL AVAILABILITY]

According to the present invention, the ripple current of condensers which are essential constituent elements in the power conversion system of AC-DC-AC conversion type can be made smaller so as to suppress rise in temperature of the condensers and the condensers can be made smaller. Accordingly, the power conversion system of the present invention can be utilized in large-power type power conversion system effectively.

**Claims**

1.  A power conversion system (10) including a first power converter (2) which converts first AC power supplied from an AC power source (1) into DC power, a second power converter (4) which converts the DC power supplied from the first power converter (2) into second AC power to be supplied to a load (5) and condensers (3) connected in parallel to an output side of the first power converter (2), wherein

a resonance frequency f decided by parasitic inductance (6) of the condensers (3) and capacitance of the condensers (3) changed in response to use temperature of the condensers (3) and/or DC voltage applied to the condensers (3) is set to fall within a range of

$$mfc+\Delta f\leq f\leq (m+1)fc-\Delta f$$

where fc is a carrier frequency for driving at least one of switching elements (SW1 to SW6) of the first power converter (2) and switching elements (SW7 to SW12) of the second power converter (4), $\Delta f$ a predetermined frequency and m a positive integer.

2. A power conversion system (10) according to Claim 1, wherein
   the condensers (3) are plural in number and the plural condensers (3) are connected in parallel to one another.

3. A power conversion system (10) according to Claim 1 or 2, wherein
   the predetermined frequency $\Delta f$ is set so that ripple current inputted in the condensers (3) is equal to or smaller than 200 Arms within the range of

$$mfc+\Delta f\leq f\leq (m+1)fc-\Delta f.$$

4. A power conversion system (10) according to any one of Claims 1 to 3, wherein
   the predetermined frequency $\Delta f$ is equal to or higher than 10 Hz and equal to or lower than 100 Hz.

5. A power conversion system (10) according to any one of Claims 1 to 4, wherein
   the plural condensers (3) are ceramic condensers.

6. A power conversion method of performing power conversion by a power conversion system (10) including a first power converter (2) which converts first AC power supplied from an AC power source (1) into DC power, a second power converter (4) which converts the DC power supplied from the first power converter (2) into second AC power to be supplied to a load (5) and condensers (3) connected in parallel to an output side of the first power converter (2), wherein
   a resonance frequency f decided by parasitic inductance (6) of the condensers (3) and capacitance of the condensers (3) changed in response to use temperature of the condensers (3) and/or DC voltage applied to the condensers (3) is set to fall within a range of

$$mfc+\Delta f\leq f\leq (m+1)fc-\Delta f$$

where fc is a carrier frequency for driving at least one of switching elements (SW1 to SW6) of the first power converter (2) and switching elements (SW7 to SW12) of the second power converter (4), $\Delta f$ a predetermined frequency and m a positive integer.

# FIG. 1

# FIG. 2

EP 2 509 207 A2

# FIG. 3

# FIG. 4A

# FIG. 4B

# FIG. 5

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009060691 A